# EUROPÄISCHE PATENTSCHRIFT

(11) **EP 0 439 014 B1**
(45) Veröffentlichungstag und Bekanntmachung des Hinweises auf die Patenterteilung: **20.10.1993**
(21) Anmeldenummer: 91100127.9
(22) Anmeldetag: 03.01.1991
(51) Int. Cl.: B64C 29/04, B64C 39/10

(54) **Flügelrand-Düsen-VSL-Flugzeug**
Fan-in-wingedge aircraft
Avion à ventilateurs en ailes

(30) Priorität: 08.01.1990 DE 4000344
(43) Veröffentlichungstag der Anmeldung: 31.07.1991
(73) Patentinhaber: Teinzer, Harald, D-81927 München (DE); Teinzer, Bernd, D-74722 Buchen (DE)
(72) Erfinder: Teinzer, Harald, D-81927 München (DE); Teinzer, Bernd, D-74722 Buchen (DE)

(56) Entgegenhaltungen:
- DE-A- 2 401 125
- GB-A- 2 219 560
- US-A- 3 312 425
- US-A- 4 193 568

## Beschreibung

### 1.1 Allgemein

Das Flügelrand-Düsen-VSL-Flugzeug (im folgenden FD-VSL-Flugzeug genannt) ist ein vertikal startendes und vertikal landendes Flugzeug. Es gehört zu den VSL-Mantelpropeller- oder VSL-Mantelturbinen-Flugzeugen.
Diese Fluggeräte erzeugen durch einen nach unten gerichteten Luft/Gas-Strahl innerhalb einer Ummantelung ausreichend Schub für vertikales Landen und Starten, sowie für das Fliegen. Als Stand der Technik sind Fluggeräte (Lit: W.Just, Vertikalflugzeuge und Luftkissenfahrzeuge, Verlag Flugtechnik Stuttgart, 1961) bekannt, bei denen in einem normalen stromlinienförmigen Flugzeugrumpf mit den üblichen Antrieben für den Horizontalflug zusätzlich vertikal gerichtete Propeller/Axialturbinen-Antriebe zum Erzeugen eines vertikalen Gas/Luft-Stahls angeordnet sind. Außerdem gibt es VSL-Flugzeuge, die durch Schwenken des Propeller/Axialturbinenantriebs oder durch Umlenkung einen vertikal gerichteten Gas/Luftstrom erzeugen. Dieser Gas/Luft-Strahl heißt Vollkammerstrahl, weil er aus dem vollen Ouerschnitt einer Düsenkammer kommt und vertikal zum Boden gerichtet ist (Lit. s. S.203).

Außerdem gibt es Fluggeräte, die sich nicht allzuweit vom Boden entfernen können, die Luftkissenfahrzeuge. Hier wird zwischen Geräten mit einem Vollkammerstrahl und einem Ringstrahl unterschieden. Als Antriebe sind jeweils Axialturbinen vorgesehen (Lit. s. S.190 und S.137 bis S.189).

Die Erfindung geht von einem Nur-Flügel-Flugzeug aus, bei dem der Flügel zweischichtig ausgebildet ist. Zwischen den beiden Schichten, dem Flügelmantel und dem Flügelunterteil, ist ein Luftkanal angeordnet. Am Flügelunterteil sind Düsen angeordnet, deren Austrittsöffnung nach unten gerichtet ist. Ein Gas/Luftstrom wird zentral von oben angesaugt, zentral unter den Flügelmantel in den Luftkanal und weiter radial zu den Düsen geleitet. Als Antrieb des Gas/Luftstroms dient eine Radialturbine mit axialem Lufteinlass (vergl. US-PS 4,193,568).

Ausgehend von diesem Stand der Technik stellt sich die Erfindung die Aufgabe, ein besseres Fluggerät vorzuschlagen. Es soll weitgehend unabhängig von Bodeneffekten vertikal starten und landen können, wobei nach dem Übergang in den Horizontalflug (Transition) die Flügel in denen sich Randdüsen befinden, ganz oder teilweise den Auftieb übernehmen können.

Gelöst wird diese Aufgabe durch die Merkmale des Patentanspruchs 1.

Vorteile der Erfindung sind, daß das FD-VSL-Flugzeug ähnlich einem Hubschrauber überall starten und landen kann, ohne dessen sonstige Nachteile zu besitzen. Außerdem kann es nach dem Übergang in den Horizontalflug erhebliche höhere Fluggeschwindigkeiten bei besserer Manövrierfähigkeit erreichen.

Die folgende Funktionsbeschreibung geht anhand der Figuren von einer rotationsymmetrischen Ausführung ohne Vorzugsflugrichtung und von einer nicht-rotationssymmetrischen Ausführung mit Vorzugsflugrichtung aus.

Figur 1 zeigt eins rotationssymmetrische Ausführung in Vorderansicht (1.1) und Draufsicht (1.2).

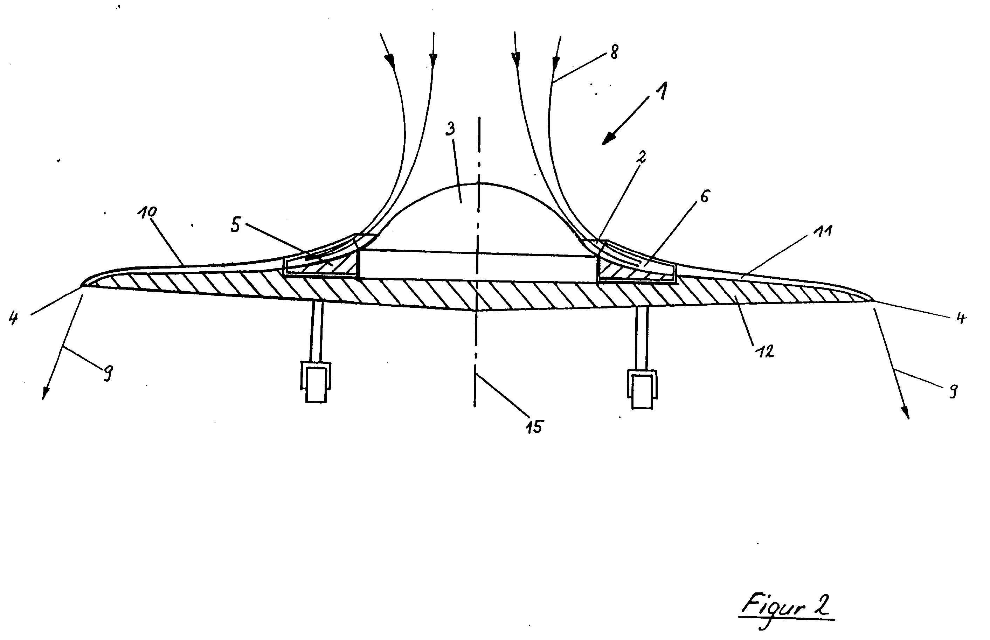

Figur 2 stellt den Schnitt A-B der rotationssymmetrischen Ausführung nach Figur 1 dar.

Figur 3 stellt einen Flügelausschnitt nach den Figuren 1 und 2 mit Flügelrandzone, Randdüse und Gier-Steuerklappen dar.

Figur 4 zeigt die vorgesehen Steuereinrichtungen für die Nickachse und die Rollachse, auf die Darstellung des Flügelmantels ist verzichtet.

Figur 5 zeigt für eine nicht-rotationssymmetrische Ausführung die Vorderansicht, die Draufsicht und einen Ausschnitt mit den Turbinen-Lufteinlassöffnungen um das Cockpit darstellt.

### 1.2 Funktionsbeschreibung

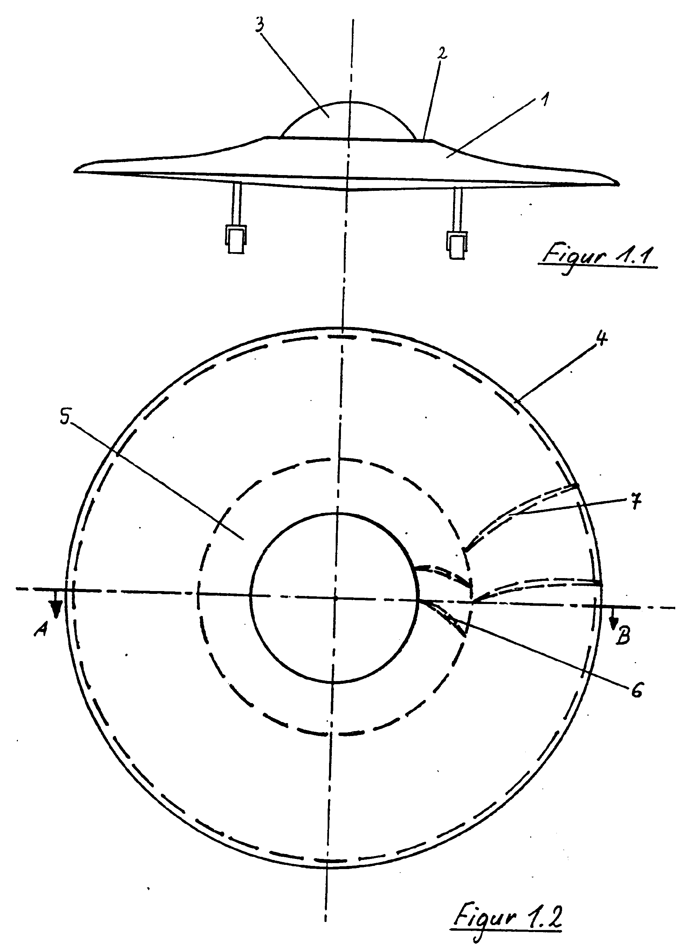

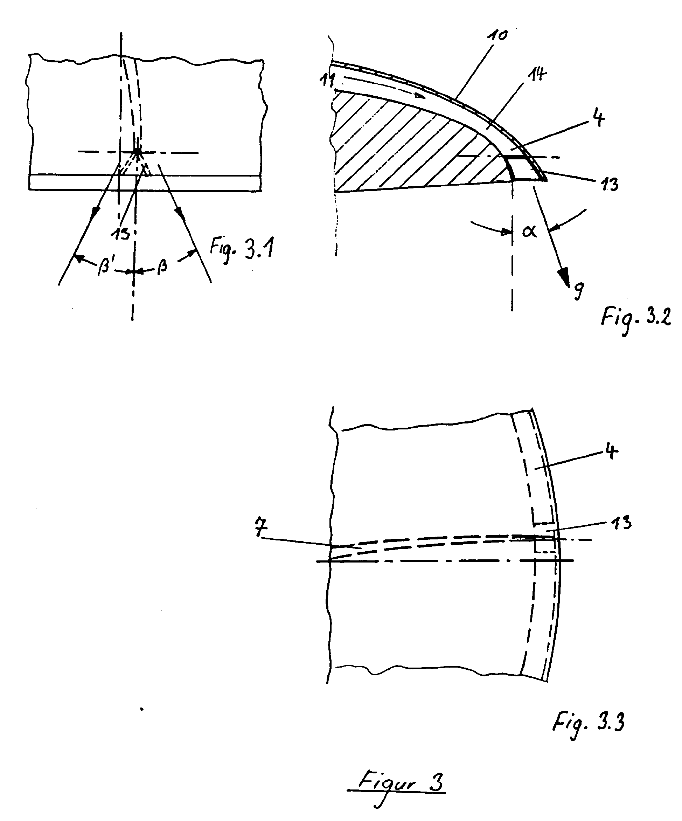

Bei der rotationssymmetrischen Ausführung nach Figur 1 besteht das FD-VSL-Flugzeug aus einem flachen scheibenförmigen Flugzeugkörper in dessen Zentrum sich ein Zentralteil mit Cockpit (3) befindet. Das Zentralteil ist von einem scheibenförmigen Ring umgeben, der im folgenden als Flügel (1) bezeichnet wird. Über einen ringförmigen Axiallufteinlaß (2) der das Cockpit (3) umschließt und mit Leitvorrichtungen versehen ist, wird von einer sich im Flügel (1) befindenden Radialturbine (5) Luft angesaugt. Die Radialturbine ist ein-oder mehrstufig ausgebildet und mit rückwärts gekrümmten Schaufeln (6) ausgerüstet, um den angesaugten Luftstrom (8) möglichst radial in den Luftkanal (11) zwischen Flügelunterteil (12) und Flügelmantel (10) austreten zu lassen. Innerhalb des ringförmig ausgelegten Luftkanals (11) befindet sich eine Strömungsleitvorrichtung, die über Leitschaufeln (7) die Lenkung des Luftstroms radial zu den Randdüsen hin sicherstellt. Die Erzwingung der radialen Weiterleitung des Luftstroms durch die Leitschaufeln (7) bewirkt eine weitgehende Kompensation des Turbinenantriebsdrehmoments. Zudem dienen diese Leitschaufeln als tragende Verbindung zwischen Flügelmantel (10) und dem Flügelunterteil (12).
Der zu den Randdüsen (4) geleitete Gas/Luft-Strom wird wie in Figur 3 dargestellt in Richtung Boden umgelenkt und erzeugt beim Verlassen der Randdüsen den Hauptteil des Schubs durch den hierbei erzielten Rückstoßeffekt. Die Randdüsen sind durch die verstellbaren Leitschaufeln (7) voneinander getrennt und weisen kurz vor der Austrittsöffnung eine gewisse Querschnittsverengung (14) mit anschließender Querschnittserweiterung (Venturi-Effekt) auf. Die Querschnittsverengung bewirkt eine Steigerung der Austrittsgeschwindigkeit und somit eine Erhöhung des Schubs.
Neben dem Rückstoßeffekt durch die Randdüsen trägt der Sog der Radialturbine zusätzlich zum Gesamtschub bei.

Die Umlenkung des Luftstroms (9) am Flügelrand in Richtung Boden kann entweder senkrecht oder in gewissen Abstrahlwinkeln Alpha nach außen und Beta tangential erfolgen (Figur 3). Durch den Abstrahlwinkel Alpha wird erreicht, daß bei Starts und Landungen in unbefestigtem Gelände die Bodenflächenbelastung durch den auftreffenden Luftstrahl verringert wird und zudem vom Luftstrahl getroffene lose Gegenstände vom Flugzeug wegbewegt werden.

Zur Steuerung des FD-VSL-Flugzeugs um die Gierachse (15) sind, wie in Figur 3 dargestellt ist, am Ende der Leitschaufeln (7) Steuerklappen (13) angebracht, die den austretenden Luftstrahl je nach Stellung so umlenken (Winkel Beta), daß eine gezielte Gierbewegung (Links/Rechts-Drehung um Gierachse) erfolgt.

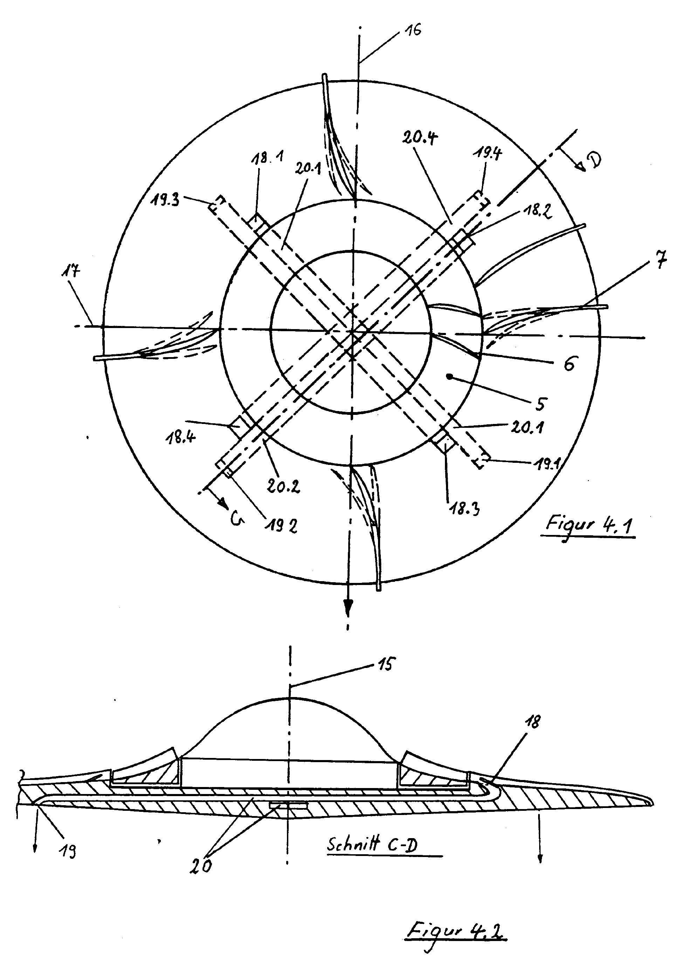

Die Steuereinrichtungen für die Nick- und Rollbewegungen sind beim rotationssymmetrischen Ausführungsbeispiel identisch. Da es hierbei keine Vorzugsflugrichtung gibt, ist die Lage Rollachse (16) und der Nickachse (17) frei festlegbar. Die Steuereinrichtungen des FD-VSL-Flugzeugs für Bewegungen um die Rollachse und Nickachse sind in Figur 4 dargestellt. Hierzu sind 4 Luftausschleusklappen (18) im Luftkanal (11) gleich nach dem Turbinenaustritt um 90 Grad versetzt angeordnet. Die Luftausschleusklappen (18) können je nach Stellung einen gewissen Luftstrom aus dem Luftkanal ausleiten, der über einen Steuerkanal (20) zur gegenüberliegenden Steuerdüse (19) geführt wird. Der Luftaustritt aus den Steuerdüsen ist ähnlich wie bei den bereits beschriebenen Randdüsen in Richtung Boden gerichtet. Der durch die Luftausschleusung fehlende Schub und der auf der gegenüberliegenden Seite zusätzliche Schub durch die Steuerdüse (19) bewirken ein Drehmoment um die Achse senkrecht zur Verbindungslinie zwischen Luftausschleusklappe (18) und Steuerdüse 19). Da wie in Figur 4 dargestellt vier um 90 Grad versetzte Luftausschleusklappen mit gegenüberliegenden Steuerdüsen vorgesehen sind, kann praktisch für jede Richtung ein resultierendes Nick/Roll-Drehmoment eingestellt werden. Die Anzahl der Luftausschleusklappen mit zugehörigen Steuerdüsen ist nicht auf 4 festgelegt, es müssen jedoch mindestens 3 sein. Zusätzlich muß für die Steuerung des FD-VSL-Flugzeugs (speziell bei einstufigen Radialturbinen) die Kreiselwirkung der Radialturbine für die resultierende Nick/Roll-Bewegung Berücksichtigung finden.

In Figur 4 ist zusätzlich eine Möglichkeit zum Trimmen der Lage zu der Nickachse und der Rollachse dargestellt. Hierbei ist vorgesehen, vier um 90 Grad versetzte Leitschaufeln (7) am Einlaß des Luftkanals (11) so zu verändern, daß der Luftdurchsatz pro Quadrant innerhalb gewisser Grenzen veränderbar ist. Der veränderte Luftdurchsatz ändert den Schub im betreffenden Quadrant und ermöglicht somit eine Trimmung.

Die Flugrichtung, die aufgenommen wird, ergibt sich durch eine gerichtete Antriebskraft, resultierend aus der Gesamtschubkraft und den über die Steuerung eingestellten Neigungswinkel. Zusätzlich kann bei der rotationssymmetrischen Ausführung ähnlich wie bei der im folgenden beschriebenen nicht-rotationssymmetrischen Ausführung eine Vorzugsflugrichtung über einen horizontal gerichteten Turbinen- oder Propellerantrieb unterstützt werden.

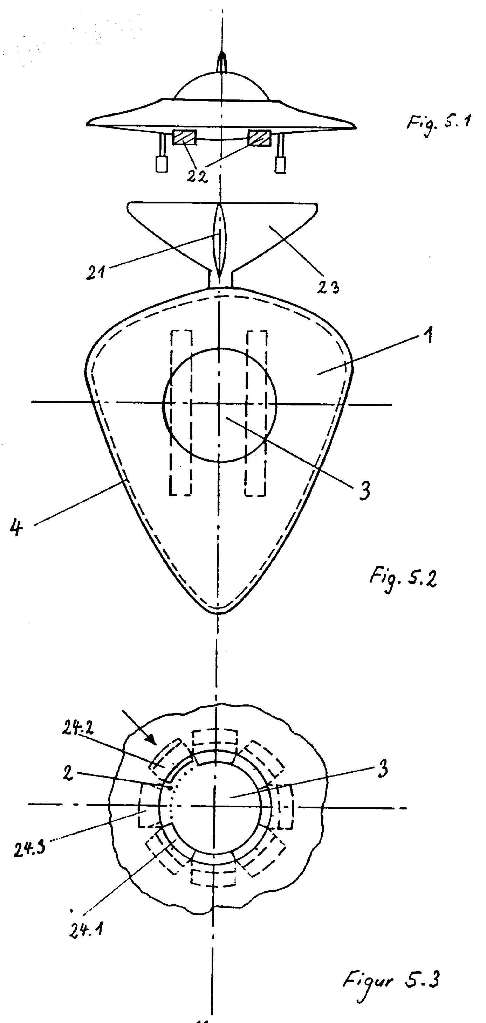

In Figur 5 ist eine nicht-rotationssymmetrische Ausführung des FD-VSL-Flugzeugs mit Vorzugsflugrichtung dargestellt.

Diese Ausführung kann nach Erreichung einer ausreichenden Horizontalgeschwindigkeit in einen Flug mit aerodynamischen Auftrieb durch die Flügel in Vorzugsflugrichtung übergehen. Dieses Ausführungsbeispiel führungsbeispiel ist zusätzlich mit einem Höhenleitwerk (23) und einem Seitenleitwerk (21) ausgelegt. Der Flügel (1), an dem in der Randzone die Randdüsen (4) für Senkrecht-Start/Landung vorgesehen sind, hat für die Vorzugsflugrichtung eine aerodynamisch günstige Form. In diesem Ausführungsbeispiel ist ein spezielles Zweifach-Triebwerk (22) vorgesehen, das in Vorzugsflugrichtung angeordnet ist und bei dem die Kraftübertragung zur Radialturbine ausgekuppelt und anschließend der Horizontalschub gesteigert werden kann.

Es ist weiterhin vorgesehen, den Lufteinlaß (2) über Verschlußsegmente (24), die radial in Richtung Cockpit (3) ausgefahren werden können, verschließbar zu machen. Das Verschließen dieses Lufteinlasses verhindert bei hohen Horizontalgeschwindigkeiten die Bildung von störenden Wirbeln. Bei der Vertikalflugphase kann durch teilweises symmetrisches Verschließen des Lufteinlasses (2) durch die Segmente (24) eine Vertikalschubtrimmung erfolgen. Eine unsymmetrische Verschließung kann mit zur Nick/Roll-Trimmung herangezogen werden.

In Figur 5.3 sind 8 Verschlußsegmente dargestellt. Segment (24.1) zeigt ein Segment in einem voll ausgefahrenen Zustand, Segment (24.2) zeigt ein Segment in halb ausgefahrenen Zustand und Segment (24.3) zeigt ein Segment im eingefahrenen nichtbetätigten Zustand für volle Öffnung. Als Mindestanzahl der Verschlußelemente sind 3 vorgesehen.

Die Steuerung des FD-VSL-Flugzeugs über die vorgesehenen Steuereinrichtungen wird in Verbindung mit Sensoren zentral von einem Flugregler durchgeführt.

Alle Steuervorgänge können elektrisch und/oder hydraulisch und/oder pneumatisch und/oder mechanisch durchgeführt werden. Steuer- und Regelvorgänge können mittels einer elektronischen Steuereinheit (CCV, configuration controlled vehicle) gesteuert werden und durch Sensorsysteme überwacht sein.

### Bezugszeichenliste

- 1: Flügel
- 2: Lufteinlaß, Axiallufteinlaß
- 3: Zentralteil mit Cockpit
- 4: Randdüsen, schlitzförmig
- 5: Radialturbine
- 6: Turbinenschaufeln, rückwärtsgekrümmt
- 7: Leitschaufeln, Strömungsleitvorrichtung
- 8: Ansaugluftstrom
- 9: Luftstrom am Flügelrand
- 10: Flügelmantel
- 11: Luftkanal
- 12: Flügelunterteil
- 13: Steuerklappen
- 14: Querschnittsverengung an den Randdüsen
- 15: Gierachse
- 16: Rollachse
- 17: Nickachse
- 18: Ausschleusklappen
- 19: Steuerdüsen
- 20: Steuerkanäle
- 21: Seitenleitwerk
- 22: Zweifachtriebwerk
- 23: Höhenleitwerk
- 24: Verschlußsegmente

Alpha Abstrahlwinkel nach außen, axial
Beta Abstrahlwinkel nach außen, tangential

## Patentansprüche

1. Nur-Flügel-Flugzeug, bei dem der Flügel (1) zweischichtig ausgebildet ist, wobei zwischen den beiden Schichten, dem Flügelmantel (10) und dem Flügelunterteil (12), ein Luftkanal (11) angeordnet ist, wobei am Flügelunterteil Düsen (4) angeordnet sind, deren Austrittsöffnung nach unten gerichtet ist, bei dem ein Gas/Luftstrom (8) zentral von oben (axial) angesaugt ist, zentral unter den Flügelmantel (10) in den Luftkanal (11) und weiter radial zu den Düsen (4) geleitet ist, wobei als Antrieb des Gas/Luftstroms (8) eine Radialturbine (5,6) mit axialem Lufteinlass vorgesehen ist, wobei die Schubwirkung des Gas/Luftstroms steuerbar ist,
dadurch gekennzeichnet,
daß die Düsen als schlitzförmige Randdüsen (4) ausgebildet sind, daß die Richtung des Gas/Luftstrom (8) an den Randdüsen (4) einstellbar ist, wobei die Turbinenschaufeln (6) der Turbine rückwärts gekrümmt sind, die den Luftstrom über Leitschaufeln (7), die verstellbar sind, vom Turbinenrad (6) zu den Randdüsen (4) radial zuführen.

2. Nur-Flügel-Flugzeug nach Anspruch 1, dadurch gekennzeichnet, daß auf dem Flügelunterteil ein Zentralteil mit Cockpit (3) vorgesehen ist, wobei der axiale Lufteinlaß ringförmig um das Cockpit angeordnet ist und mit Leitvorrichtungen versehen ist.

3. Nur-Flügel-Flugzeug nach einem der vorherigen Ansprüche, dadurch gekennzeichnet, daß die Richtung des Gas/Luftstroms an den Randdüsen in einen Abstrahlwinkel Alpha nach außen und in einen Abstrahlwinkel Beta tangential einstellbar sind, bei denen die Querschnittsverengung (14) einstellbar ist.

4. Nur-Flügel-Flugzeug nach einem der vorherigen Ansprüche, dadurch gekennzeichnet, daß die Turbine (5) mehrstufig ist.

5. Nur-Flügel-Flugzeug nach einem der vorherigen Ansprüche, dadurch gekennzeichnet, daß die Turbine eine Gasturbine ist.

6. Nur-Flügel-Flugzeug nach einem der vorherigen Ansprüche, dadurch gekennzeichnet, daß der Flügel (1) rotationssymmetrisch ist.

7. Nur-Flügel-Flugzeug nach einem der Ansprüche 1 bis 5, dadurch gekennzeichnet, daß der Flügel (1) für eine bevorzugte Flugrichtung aerodynamisch optimal ausgebildet ist, wobei dafür mindestens ein zusätzliches Schubtriebwerk vorgesehen ist.

8. Nur-Flügel-Flugzeug nach Anspruch 7, dadurch gekennzeichnet, daß mindestens ein Schubtriebwerk die Turbine (5) antreibt und die Turbine beim Übergang in den Horizontalflug abschaltbar und/oder stufenlos schaltbar ist.

9. Nur-Flügel-Flugzeug nach einem der vorherigen Ansprüche, dadurch gekennzeichnet, daß die Turbine (5) ein Radialverdichter ist.

10. Nur-Flügel-Flugzeug nach einem der vorherigen Ansprüche, dadurch gekennzeichnet, daß der Turbineneinlaß (2) sektorweise stufenlos verschließbar ist.

11. Nur-Flügel-Flugzeug nach einem der vorherigen Ansprüche, dadurch gekennzeichnet, daß dem Luftkanal (11) Ausschleusklappen (18) zugeordnet sind, Steuerkanäle (20) und Steuerdüsen (19) vorgesehen sind, wobei die Steuerdüsen diametral zu den Ausschleusklappen angeordnet und nach unten gerichtet sind.

12. Nur-Flügel-Flugzeug nach einem der vorherigen Ansprüche, dadurch gekennzeichnet, daß alle Steuer- und Regelvorgänge mittels einer elektronischen Steuereinheit (CCV, configuration controlled vehicle) gesteuert sind und durch Sensorsysteme überwacht sind.

13. Nur-Flügel-Flugzeug nach einem der vorherigen Ansprüche, dadurch gekennzeichnet, daß alle Steuervorgänge elektrisch und/oder hydraulisch und/oder pneumatisch und/oder mechanisch durchführbar sind.

## Claims

1. A wing-only aircraft with wings of two layers, consisting of a wing cover (10) and wing underside (12) surrounding an air channel (11), with nozzles (4) in the wing underside directed downwards, which suck a gas or air current (8) centrally from above (axially) through the wing cavity (10) in the air channel (11) radially to the nozzles (4), using a radial turbine (5,6) with axial air inlets to drive the gas or air current (8), which can direct the propulsive force,
with the characteristic that,
the nozzles (4) are in the form of slits in the wing edge and direct the gas or air current (8) adjustably, the turbine blades (6), which drive the air current via adjustable guiding vanes (7) radially via the turbine wheel (6) to the wing-edge nozzles, are curved.

2. A wing-only aircraft as claimed in Claim 1 with the characteristic that a central part with cockpit is added to the wing underside with the axial air-inlet and with the guiding mechanism concentrically situated around it.

3. A wing-only aircraft as claimed in one of the previous Claims with the characteristic that the direction of the expulsed air or gas current can be adjusted at an angle Alpha downwards and an angle Beta tangentially and in cross-section (14).

4. A wing-only aircraft as claimed in one of the previous Claims with the characteristic that the turbine (5) consists of multiple stages.

5. A wing-only aircraft as claimed in one of the previous Claims with the characteristic that the turbine (5) is a gas turbine.

6. A wing-only aircraft as claimed in one of the previous Claims with the characteristic that the wing is rotationally symmetrical.

7. A wing-only aircraft as claimed in one of the Claims 1 or 2 with the characteristic that the wing (1) is aerodynamically optimised to fly in a preferential direction with the assistance of an additional propulsion engine.

8. A wing-only aircraft as claimed in Claim 7 with the characteristic that the propulsive engine drives the turbine (5) and that the turbine can be turned off or continually adjusted during horizontal flight.

9. A wing-only aircraft as claimed in one of the previous Claims with the characteristic that the turbine (5) is a radial compressor.

10. A wing-only aircraft as claimed in one of the previous Claims with the characteristic that the turbine inlets (2) can be closed in sectors or continuously.

11. A wing-only aircraft as claimed in one of the previous Claims with the characteristic that exit vanes are included in the air channel (11), which are connected with control cannels (20) and nozzles (19), which are situated diametrically opposed to the exit vanes and are directed downwards.

12. A wing-only aircraft as claimed in one of the previous Claims with the characteristic that all control and feedback processes are managed by an electronic control unit (CCV, configured controlled vehicle) and monitored by sensor signals.

13. A wing-only airclraft as claimed in one of the previous Claims with the characteristic that all control processes are implemented electronically, hydraulically or mechanically.

## Revendications

1. Avion uniquement formé par son aile (1) à deux couches, à savoir le manteau de l'aile (10) et la partie inférieure de celle-ci (11), un canal d'air (11) se trouvant entre les deux couches, des tuyères étant disposées à la partie inférieure de l'aile, l'ouverture de sortie des tuyères étant dirigée vers le bas, un jet d'air/gaz (8) étant aspiré centralement par le haut (axialement) et dirigé centralement dans le canal à air situé sous le manteau de l'aile (10), puis guidé radialement vers les tuyères, l'entraînement du jet d'air/gaz (8) étant effectué par une turbine radiale (5, 6) avec entrée d'air axiale, l'effet de poussée du jet d'air/gaz pouvant être commandée,
caractérisé en ce que:
les tuyères périphériques (4) sont en forme de fente et, que la direction des jets d'air/gaz (8) est règlable au niveau des tuyères périphériques, les aubes (6) règlables de la turbine étant recourbées vers l'arrière pour diriger radialement le jet d'air/gaz au travers des aubes directrices (7) à partir de la roue (6) de la turbine vers les tuyères périphériques.

2. Avion uniquement formé par son aile selon la revendication 1, caractérisé en ce qu'un cockpit (3) est prévu sur la partie centrale de la partie inférieure de l'aile, l'entrée du jet d'air étant agencée autour du cockpit sous forme annulaire et équipée d'un dispositif de guidage.

3. Avion uniquement formé par son aile selon une des revendications précédentes, caractérisé en ce que la direction du jet d'air/gaz est règlable au niveau des tuyères périphériques selon un angle alpha ( ) d'éjection et un angle beta ( ) tangentiel, la réduction de section des tuyères périphériques étant règlable.

4. Avion uniquement formé par son aile selon une des revendications précédentes, caractérisé en ce que la turbine est composée de plusieurs étages.

5. Avion uniquement formé par son aile selon une des revendications précédentes, caractérisé en ce que la turbine est une turbine à gaz.

6. Avion uniquement formé par son aile selon une des revendications précédentes, caractérisé en ce que l'aile présente une symétrie de révolution.

7. Avion uniquement formé par son aile selon une des revendications 1 à 5, caractérisé en ce que l'aile est conçue pour une direction préférentielle de vol réalisée par une aérodynamique optimale, l'avion possédant pour cela au moins un moteur de poussée supplémentaire.

8. Avion uniquement formé par son aile selon la revendication 7, caractérisé en ce qu'au moins un des moteurs de poussée entraîne une turbine (5) et que la turbine est commandée en continu lors du passage en vol horizontal.

9. Avion uniquement formé par son aile selon une des revendications précédentes, caractérisé en ce que la turbine (5) est un compresseur radial.

10. Avion uniquement formé par son aile selon une des revendications précédentes, caractérisé en ce que l'entrée de la turbine peut être fermée en continu par secteur.

11. Avion uniquement formé par son aile selon une des revendications précédentes, caractérisé en ce que le canal à air est muni de volets d'évacuation (18), que des canaux de commande (20) et des tuyères directrices sont prévus, les tuyères directrices étant diamètralement opposées par rapport aux volets d'évacuation et dirigées vers le bas.

12. Avion uniquement formé par son aile selon une des revendications précédentes, caractérisé en ce que tout le processus de commande et de réglage est réalisé par une unité de contrôle électronique (CCV, configuration controlled vehicle) assistée par un système de capteur.

13. Avion uniquement formé par son aile selon une des revendications précédentes, caractérisé en ce que tous les processus de commande pouvant être effectués soit électriquement, et/ou hydrauliquement, et/ou pneumatiquement, et/ou mécaniquement.
